# EUROPEAN PATENT APPLICATION

(11) **EP 2 653 705 A1**
(43) Date of publication of application: **23.10.2013**
(21) Application number: 10860791.2
(22) Date of filing: 16.12.2010
(51) Int. Cl.: F02D 29/02, F02D 41/08

(54) **ENGINE IDLING CONTROL DEVICE OF EXCAVATOR AND METHOD THEREOF**

(71) Applicant: Volvo Construction Equipment AB, 631 85 Eskilstuna (SE)
(72) Inventor: KIM, Eui-Chul, Changwon-si Gyeongsangnam-do 642-370 (KR); LEE, Chun-Han, Gimhae-si Gyeongsangnam-do 621-785 (KR)
(74) Representative: Epping - Hermann - Fischer
(86) International application number: PCT/KR2010/009000
(87) International publication number: WO 2012/081745

(57) **Abstract**

An engine idling control device for an excavator and a method thereof are provided, which can recognize the state of an engine, an on/off state of a function selection switch, and a user's intention to work that has maximally been reflected, reduce fuel use and production of carbon dioxide through automatic stopping or driving of the engine in accordance with an operation state of a safety device having convenience, and easily implement an engine stop and start function in accordance with a user's selection. The engine idling control device includes a first signal detection unit, a second signal detection unit, and an engine idling control unit automatically stopping or driving an engine in accordance with the state of the engine, the on/off state of the function selection switch detected by the first signal detection unit, and the operation state of the safety device detected by the second signal detection unit.

## Description

### TECHNICAL FIELD

The present invention relates to an engine idling control device for an excavator and a method thereof. More particularly, the present invention relates to an engine idling control device for an excavator and a method thereof, which can recognize the state of an engine, an on/off state of a function selection switch, and a user's intention to work that has maximally been reflected, reduce fuel use and production of carbon dioxide through automatic stopping or driving of the engine in accordance with an operation state of a safety device having convenience, and easily implement engine stop and start function in accordance with a user's selection.

### BACKGROUND ART

Generally, an excavator has a function of preventing unnecessary fuel consumption through lowering engine revolution to the minimum revolution (idle state) if an operation is not input for a predetermined time period in an engine driving state.

Since the engine is continuously driven even in an idle state, fuel is consumed and carbon dioxide is produced. In order to solve this problem, Korean Patent Application No. 10-2001-0052517 discloses a method for controlling driving or stopping of an engine of a vehicle for industry through time setting according to operation of an accelerator pedal. However, there is difficulty in reflecting user's convenience, and resetting is required when the work environment is changed or user's intention is changed to cause inconvenience.

### DISCLOSURE

### TECHNICAL PROBLEM

Therefore, the present invention has been made to solve the above-mentioned problems occurring in the related art, and one subject to be achieved by the present invention is to provide an engine idling control device for an excavator and a method thereof, which can recognize the state of an engine, an on/off state of a function selection switch, and a user's intention to work that has maximally been reflected, reduce fuel use and production of carbon dioxide through automatic stopping or driving of the engine in accordance with an operation state of a safety device having convenience, and easily implement engine stop and start function in accordance with a user's selection.

### TECHNICAL SOLUTION

In accordance with an aspect of the present invention, there is provided an engine idling control device for an excavator, which includes a first signal detection unit detecting an on/off state of a function selection switch; a second signal detection unit detecting an operation state (on/off state) of a safety device; and an engine idling control unit automatically stopping or driving an engine in accordance with a state of the engine, the on/off state of the function selection switch detected by the first signal detection unit, and the operation state of the safety device detected by the second signal detection unit.

The engine idling control unit may automatically stop the engine if the function selection switch is turned on and the safety device is turned off in a state where the engine is driven, and may drive the engine if the function selection switch is turned on and the safety device is turned on in a state where the engine is stopped.

The safety device may be any one of a control lock device that is installed inside an operator's seat of the excavator and a safety lever.

In accordance with another aspect of the present invention, there is provided a method of controlling engine idling for an excavator, which includes detecting an on/off state of a function selection switch; detecting an operation state (on/off state) of a safety device; and automatically stopping or driving an engine in accordance with a state of the engine, the detected on/off state of the function selection switch, and the detected operation state of the safety device.

The step of automatically stopping or driving the engine may automatically stop the engine if the function selection switch is turned on and the safety device is turned off in a state where the engine is driven, and may drive the engine if the function selection switch is turned on and the safety device is turned on in a state where the engine is stopped.

The safety device may be any one of a control lock device that is installed inside an operator's seat of the excavator and a safety lever.

### ADVANTAGEOUS EFFECT

According to the present invention, the state of the engine, the on/off state of the function selection switch, and the user's intention to work that has maximally been reflected can be recognized, and the fuel use and the production of carbon dioxide can be reduced through automatic stopping or driving of the engine in accordance with an operation state of a safety device having convenience. Further, the engine stop and start function can be implemented in accordance with the user's selection.

### BRIEF DESCRIPTION OF THE DRAWINGS

The above objects, other features and advantages of the present invention will become more apparent by describing the preferred embodiments thereof with reference to the accompanying drawings, in which:
Fig. 1 is a block diagram illustrating the configuration of an engine idling control device for an excavator according to the present invention;
Fig. 2 is a flowchart illustrating in order the operation of an engine idling control device for an excavator according to the present invention; and
Figs. 3A to 3C are graphs illustrating an engine stop state in controlling the stop and start of an engine according to the present invention as compared with the related art.

### * Description of Reference Numerals in the Drawing

101: function selection switch
102: safety device
103: first signal detection unit
104: second signal detection unit
105: engine idling control unit
106: engine

### BEST MODE

Now, a preferred embodiment of the present invention will be described in detail with reference to the accompanying drawings.

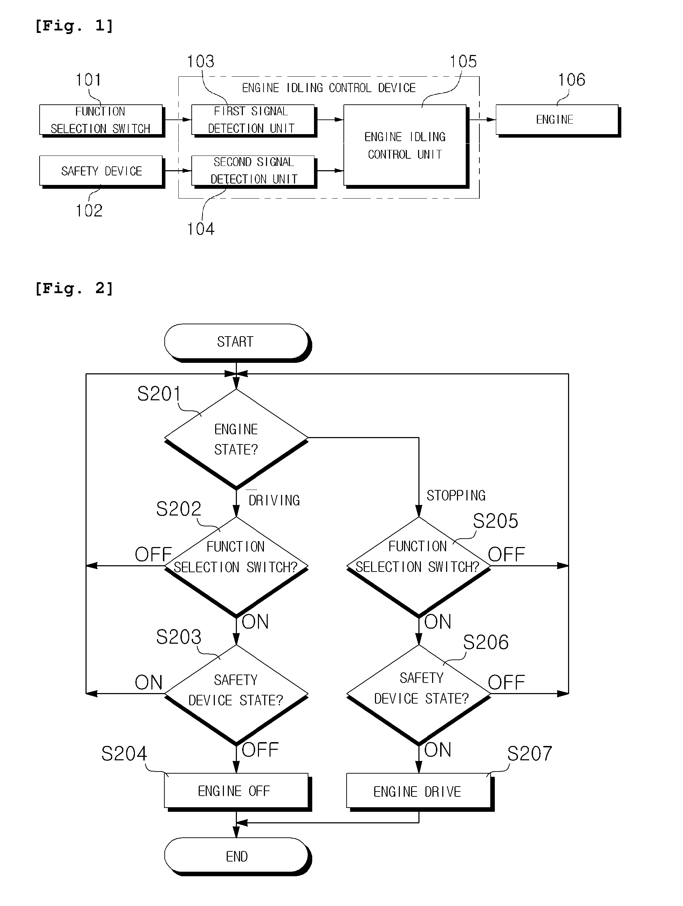

Fig. 1 is a block diagram illustrating the configuration of an engine idling control device for an excavator according to the present invention.

As illustrated in Fig. 1, an engine idling control device for an excavator according to the present invention is configured to include a first signal detection unit 103, a second signal detection unit 104, and an engine idling control unit 105.

That is, the engine idling control device for an excavator according to the present invention includes a first signal detection unit 103 detecting an on/off state of a function selection switch 101; a second signal detection unit 104 detecting an operation state (on/off state) of a safety device 102; and an engine idling control unit 105 automatically stopping or driving an engine 106 in accordance with a state of the engine 106, the on/off state of the function selection switch 101 detected by the first signal detection unit 103, and the operation state of the safety device 102 detected by the second signal detection unit 104.

Here, the first signal detection unit 103 is electrically connected to the function selection switch 101 and the engine idling control unit 105, and detects and transfers the on/off state of the function selection switch 101, which is varied according to user's key operation, to the engine idling control unit 105.

The second signal detection unit 104 is installed between the safety device 102 and the engine idling control unit 105, and detects and transfers the operation state (on/off state) of the safety device 102 (e.g., a control lock device installed inside an operator's seat of the excavator or a safety lever) to the engine idling control unit 105.

The engine idling control unit 105 is configured to automatically stop or drive the engine 106 in accordance with the state of the engine 106, the on/off state of the function selection switch 101 detected by the first signal detection unit 103, and the operation state of the safety device 102 detected by the second signal detection unit 104. Specifically, if the function selection switch 101 is turned off in a state where the engine is in a driving state, the engine stop and start function according to the present invention is not implemented, while if the function selection switch 101 is turned on, the engine stop and start function is implemented according to the user's operation state of the safety device 102. That is, if the function selection switch 101 is turned on and the user turns off the safety device 102, the engine 106 is automatically stopped. By contrast, if the safety device 102 is turned on in the case where the function selection switch 101 is turned on in a state where the engine 106 is stopped, the engine stop and start function is implemented to drive the engine 106.

Hereinafter the operation of the engine idling control device for an excavator according to the present invention of Fig. 1 will be described with reference to Fig. 2.

Fig. 2 is a flowchart illustrating in order the operation of an engine idling control device for an excavator according to the present invention.

As illustrated in Fig. 2, the first signal detection unit first detects the on/off state of the function selection switch (S201, S202, and S205).

That is, the first signal detection unit, which is electrically connected to the function selection switch and the engine idling control unit, detects the on/off state of the function selection switch that is varied according to the user's key operation.

Then, the detected on/off state of the function selection switch is transferred to the engine idling control unit.

Next, the second signal detection unit detects the operation state (on/off state) of the safety device (S203 and S206).

That is, the second signal detection unit, which is installed between the safety device and the engine idling control unit, detects the operation state (on/off state) of the safety device.

Then, the detected operation state of the safety device is transferred to the engine idling control unit.

The safety device may be, for example, a control lock device installed inside an operator's seat of the excavator or a safety lever.

Next, the engine idling control unit automatically stops or drives the engine in accordance with the state of the engine, the on/off state of the function selection switch that is detected by the first signal detection unit, and the operation state of the safety device that is detected by the second signal detection unit (S204 and S207).

Specifically, if the function selection switch is turned off in a state where the engine is driven, the engine stop and start function according to the present invention is not implemented.

By contrast, if the function selection switch is turned on, the engine stop and start function is implemented in accordance with the user's operation of the safety device.

That is, if the function selection switch is turned on and the user turns off the safety device, the engine is automatically stopped.

By contrast, if the safety device is turned on in the case where the function selection switch is turned on in a state where the engine is stopped, i.e., if the user turns on the safety device, the engine stop and start function is implemented to start the engine driving.

As described above, according to the present invention, the state of the engine, the on/off state of the function selection switch, and the user's intention to work that has maximally been reflected can be recognized, and the fuel use and the production of carbon dioxide can be reduced through automatic stopping or driving of the engine in accordance with an operation state of a safety device having convenience. Further, the engine stop and start function can be implemented in accordance with the user's selection.

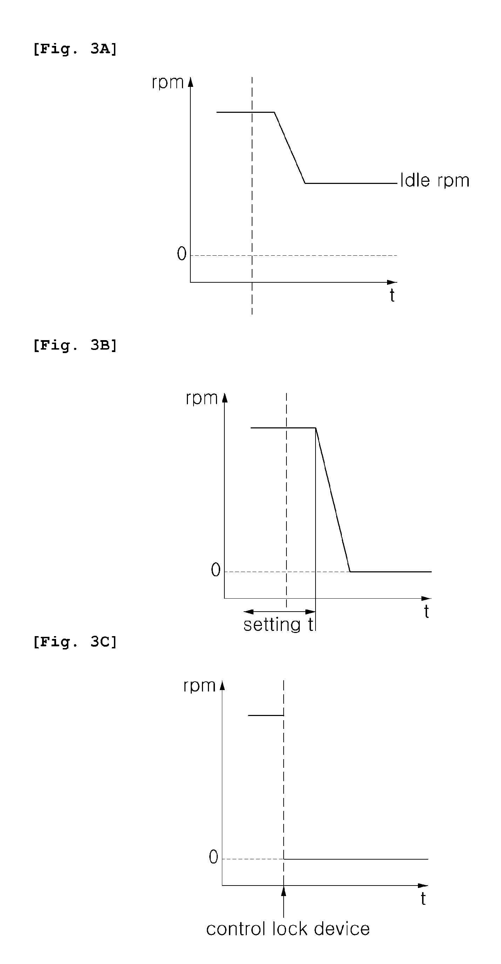

Figs. 3A to 3C are graphs illustrating an engine stop state in controlling the stop and start of an engine according to the present invention as compared with the related art.

Fig. 3A shows an engine stop operation in the related art, which lowers the engine revolution to the minimum revolution after a predetermined time elapses. Fig. 3B shows another engine stop operation in the related art, which turns off the engine after a predetermined time elapses in accordance with the time set through the existing engine idling control technology or the time set by the operator. Unlike the related art as described above, according to the present invention as illustrated in Fig. 3C, the engine can be controlled to be stopped or driven at any time even if the time point where the operator commands stopping of the safety device differs.

### INDUSTRIAL APPLICABILITY

As apparent from the above description, the present invention can be used in the engine idling control device for an excavator. More specifically, the present invention can be used in the engine idling control device for an excavator, which can recognize the state of the engine, the on/off state of the function selection switch, and the user's intention to work that has maximally been reflected, reduce the fuel use and the production of carbon dioxide through automatic stopping or driving of the engine in accordance with the operation state of the safety device having convenience, and easily implement the engine stop and start function in accordance with the user's selection.

## Claims

1. An engine idling control device for an excavator, comprising:
a first signal detection unit detecting an on/off state of a function selection switch;
a second signal detection unit detecting an operation state (on/off state) of a safety device; and
an engine idling control unit automatically stopping or driving an engine in accordance with a state of the engine, the on/off state of the function selection switch detected by the first signal detection unit, and the operation state of the safety device detected by the second signal detection unit.

2. The engine idling control device according to claim 1, wherein the engine idling control unit automatically stops the engine if the function selection switch is turned on and the safety device is turned off in a state where the engine is driven, and drives the engine if the function selection switch is turned on and the safety device is turned on in a state where the engine is stopped.

3. The engine idling control device according to claim 1, wherein the safety device is any one of a control lock device that is installed inside an operator's seat of the excavator and a safety device.

4. A method of controlling engine idling for an excavator, comprising:
detecting an on/off state of a function selection switch;
detecting an operation state (on/off state) of a safety device; and
automatically stopping or driving an engine in accordance with a state of the engine, the detected on/off state of the function selection switch, and the detected operation state of the safety device.

5. The method of controlling engine idling according to claim 4, wherein the step of automatically stopping or driving the engine automatically stops the engine if the function selection switch is turned on and the safety device is turned off in a state where the engine is driven, and drives the engine if the function selection switch is turned on and the safety device is turned on in a state where the engine is stopped.

6. The method of controlling engine idling according to claim 4, wherein the safety device is any one of a control lock device that is installed inside an operator's seat of the excavator and a safety lever.
